# EUROPEAN PATENT APPLICATION

(11) **EP 1 998 487 A1**
(43) Date of publication of application: **03.12.2008**
(21) Application number: 07737565.7
(22) Date of filing: 22.02.2007
(51) Int. Cl.: H04L 7/00, H04B 7/26, H04J 13/00

(54) **TRANSMISSION TIMING CONTROL SYSTEM, METHOD THEREOF, AND BASE STATION AND MOBILE STATION USING THE SAME**

(30) Priority: 22.02.2006 JP 2006044614
(71) Applicant: NEC Corporation, Minato-ku Tokyo 108-8001 (JP)
(72) Inventor: KOMATSU, Masahiro, Tokyo 1088001 (JP)
(74) Representative: Glawe, Delfs, Moll
(86) International application number: PCT/JP2007/053847
(87) International publication number: WO 2007/100024

(57) **Abstract**

An adaptive transmission timing control system is provided in which a base station can correctly instruct a mobile station of a timing control signal indicating the amount of variation in transmission timing and a multipath situation can be estimated in the base station with accuracy. When control information for controlling transmission timing of an upstream signal of the mobile station is generated in the base station, the mobile station is notified of the control information in every frame of the upstream signal. Specifically, the control information is generated by determining the transmission timing using a power delay profile in which frames of the upstream signal are added and synthesized in every RTT (Round Trip Time) cycle of the upstream signal. This makes it possible to heighten resistance to an error in the timing control signal, and transmission timing control can be carried out correctly.

## Description

### Technical Field

The present invention relates to a transmission timing control system and a method thereof, and a base station using the same and a mobile station, and particularly, the present invention relates to an adaptive transmission timing control system for instructing a mobile station about the amount of variation in transmission timing of a mobile station from a base station in a mobile communication system.

### Background Art

In a CDMA communication system, a signal from each mobile station mutually interferes with each other due to a difference of propagation conditions from each mobile station to a base station (for example, propagation delay time and variation in a propagation path). Therefore, as a method of reducing this interference, there is a method of carrying out control of transmission timing so that reception timing of a signal from each access user corresponds with each other in the base station after assigning a spread code orthogonal for every access user, which is called an adaptive transmission timing control (ATTC (Adaptive Transmission Timing Control)). As an example of such an adaptive transmission timing control system, there are technologies described in Patent Document 1 and Patent Document 2.

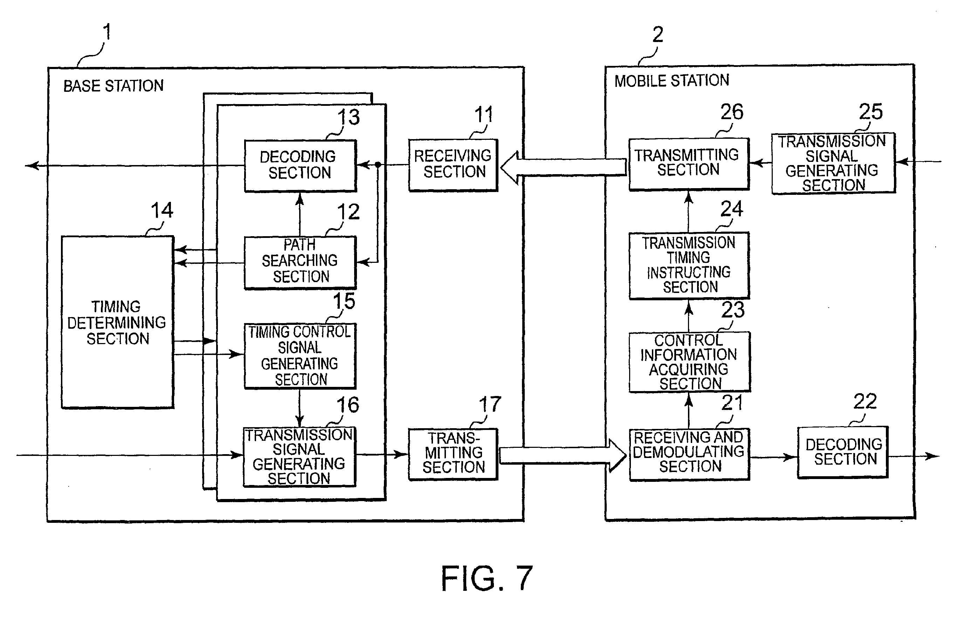

Fig. 7 shows a configuration example of a wireless communication method in which conventional adaptive transmission timing control is carried out. In a base station 1, a receiving section 11 receives signals from a plurality of mobile stations 2 (for the sake of simplification, only one mobile station is shown in the drawing). In the receiving section, a frequency conversion of a signal from an antenna is made, and after processes such as filtering and AGC, a signal is subjected to sampling with a sampling frequency more than twice as much as the chip rate in an A/D converter to output a digital signal. The signal from the receiving section is sent to a path searching section 12 and a decoding section 13. In the path searching section 12, a multipath situation is grasped using data of one frame to search timing of each path. In the decoding section 13, a decoding process including despreading is carried out in accordance with timing information of each path from the path searching section 12 to obtain decoded data.

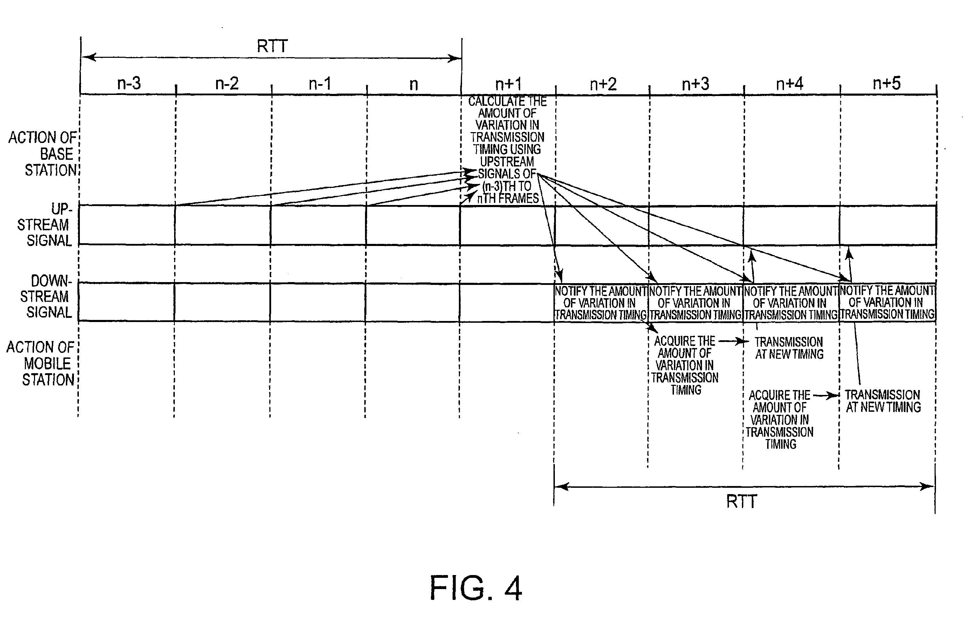

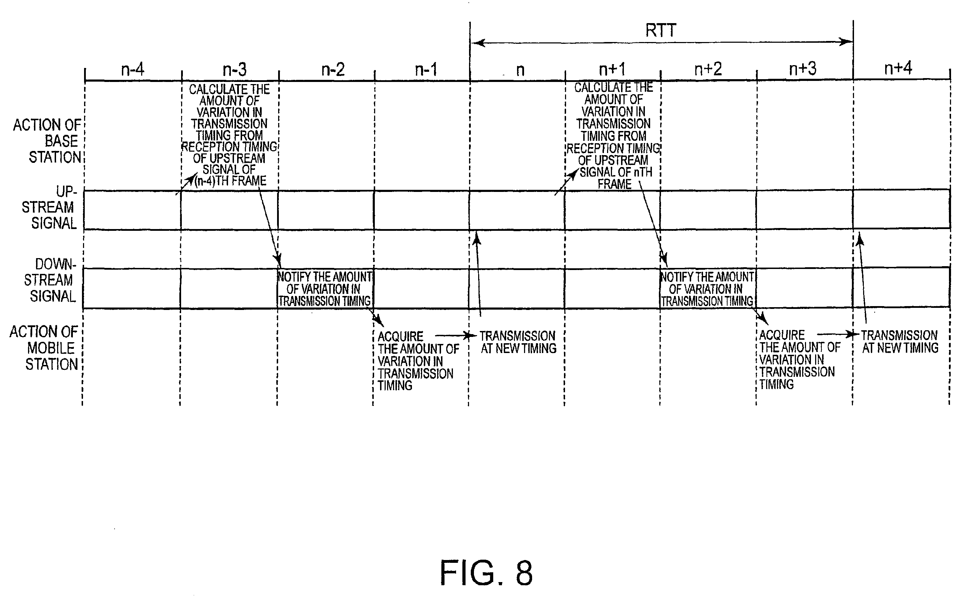

In a timing determining section 14, optimal transmission timing of each mobile station is calculated in every RTT (Round Trip Time) using a multipath situation of each mobile station, which is provided from the path searching section 12, and a timing control signal generating section 15 is notified of a difference from current timing as the amount of variation in the transmission timing in every RTT. Here, as shown in Fig. 8, the RTT means one cycle time that starts from reception at the base station and ends at next reception at the base station through measurement of reception timing at the base station, calculation of the amount of variation in the transmission timing at the base station, instruction to the mobile station from the base station, reception at the mobile station, grasp of transmission timing at the mobile station, transmission at the transmission timing specified by the mobile station. For example, in Fig. 8, 4-frame time becomes the RTT (for example, if one frame has 0.5 milliseconds, it is 2.0 milliseconds).

Referring again to Fig. 7, in the timing control signal generating section 15, in order to vary transmission timing of the mobile station once in every RTT, the amount of variation in the transmission timing is superimposed on the timing control signal once in every RTT. In the other time, that is, in the frames other than the frame for notifying the amount of variation in the transmission timing, a timing control signal is generated so that the amount of variation in the transmission timing is set to 0. In a transmission signal generating section 16, data and a control signal including the timing control signal are then generated, and are transmitted by a transmitting section 17.

In this regard, in the base station 1, the decoding section 13, the path searching section 12, the timing control signal generating section 15 and the transmission signal generating section 16 configure one set. A plurality of sets are then provided in the base station in correspondence with the number of mobile stations. The receiving section receives signals from the plurality of mobile stations to output them to the respective sets. The timing determining section 14 receives an output from the path searching section in each set, calculates optimal transmission timing of each mobile station so that timing of the plurality of mobile stations coincide with each other, and determines the amount of variation in the transmission timing as a difference from current timing. The timing control signal generating section 15 in each set is then notified of the amount of variation of each mobile station, the result, in every RTT.

In a mobile station 2, the signal from the base station 1 is received by a receiving and demodulating section 21, and the data and the control information are demodulated. The demodulated data are then decoded by a decoding section 22. Further, the demodulated control information is sent to a control information acquiring section 23, and the timing control signal is extracted from the control information. The extracted timing control signal is sent to a transmission timing instructing section 24, the amount of variation in the transmission timing is here obtained from the timing control signal, and the amount of variation in the transmission timing is added to previous transmission timing, whereby new transmission timing is determined. This variation in the transmission timing is carried out once in every RTT. A data string transmitted from the mobile station is converted to a format to be transmitted in a transmission signal generating section 25, and is transmitted at the transmission timing instructed from the transmission timing instructing section 24 by a transmitting section 26.

Control for instruction of variation in the transmission timing in the base station, transmission in the mobile station at the transmission timing actually varied from the mobile station and instruction of next transmission timing, is carried out only once in every RTT. Therefore, the timing determining section 14 is to operate in every RTT. Further, when the result comes from the timing determining section, the timing control signal generating section 15 generates a timing control signal corresponding to it. However, a timing control signal is otherwise generated so as not to vary the transmission timing.

Fig. 8 shows an example of transmission and reception timing of a control signal and its reflection timing. For example, in the base station, path search for obtaining reception timing for despreading at the (n+1)th frame is carried out using an upstream reception signal of a nth frame. The amount of variation in the transmission timing is then calculated from the multipath situation subjected to the path search in the mobile station so that reception timing of a signal from each mobile station corresponds with each other in the base station, and the mobile station is notified of the amount of variation in the transmission timing with a (n+2)th downstream signal. In the case where an influence of multipath and the like is not considered, signals become orthogonal when the signals reach the base station at the same time, but its orthogonality collapses due to an influence of multipath and the like. Thus, timing of transmission of the mobile station is varied so that the signals received by the base station become orthogonal. In the mobile station, the amount of variation in the transmission timing is acquired at a (n+3)th frame using a downstream reception signal of a (n+2)th frame, and a (n+4)th upstream signal is transmitted at transmission timing at which the amount of variation in the transmission timing is reflected.

In the base station, a signal transmitted from the mobile station at new transmission timing is not received until a (n+4)th frame. Therefore, next control in the base station is one in which an upstream reception signal of a (n+4)th frame to which new transmission timing is reflected is used. Thereafter, calculation of reception timing for despreading and calculation of the amount of variation in the transmission timing are carried out at a (n+5)th frame. Namely, the path search is carried out in order to obtain reception timing for despreading, and the amount of variation in the transmission timing is calculated from the multipath situation subjected to path search in the mobile station so that reception timing of a signal from each mobile station corresponds with each other in the base station. The mobile station is then instructed on the amount of variation in the transmission timing in a (n+6)th downstream signal. Therefore, the rest of upstream signals such as (n+1)th, (n+2)th and (n+3)th upstream signals are not used to calculate the amount of variation in the transmission timing, and the amount of variation in the transmission timing such as (n+3)th, (n+4)th and (n+5)th downstream signals to be instructed is 0.

There are the following Patent Documents as the related technologies.

Patent Document 1: Japanese Patent Application Publication No. 2001-237743

Patent Document 2: Japanese Patent Application Publication No. 2004-165716

Patent Document 3: Japanese Patent Application Publication No. 2005-130256

### Disclosure of the Invention

### Problems to be solved by the Invention:

In the conventional example described above, there is a problem that optimal timing does not come for RTT in the case where a timing control signal for instructing about the amount of variation in transmission timing has not been transmitted correctly. This is because the timing control signal is transmitted only once for the RTT. Then, in the case where reception timing does not become optimal in the base station because transmission timing of each mobile station cannot be controlled correctly, interference is increased, and reception characteristics of all mobile stations are to be deteriorated.

Further, since control is carried out only once per an RTT cycle, only a part of upstream signals received continuously (one frame in a RTT cycle) is used. Therefore, there is a problem that it is not possible to instruct about optimal transmission timing because a multipath situation cannot be estimated correctly in the case where a propagation environment is deteriorated or the variation is fast. Furthermore, there is a problem that the amount of variation in the transmission timing, which is transmitted in a downstream signal by a timing control signal, is also almost 0, which is of no use.

Therefore, the present invention is made in order to resolve these problems, and it is an object of the present invention to provide an adaptive transmission timing control system and a method thereof in which a base station can correctly instruct a mobile station of a timing control signal for notifying the mobile station of the amount of variation in transmission timing and a multipath situation can be estimated in the base station with accuracy.

### Means for solving the Problems:

A transmission timing control system according to the present invention comprises a transmission timing control system for controlling transmission timing of an upstream signal of a mobile station in a base station, the transmission timing control system including: timing control means that notifies the mobile station of control information for controlling the transmission timing with respect to every frame of the upstream signal.

A transmission timing control method according to the present invention comprises a transmission timing control method of controlling transmission timing of an upstream signal of mobile station in a base station, the transmission timing control method including: a timing control step of notifying the mobile station of control information for controlling the transmission timing with respect to every frame of the upstream signal.

A base station according to the present invention comprises a bas station including the transmission timing control system described above. Further, a mobile station according to the present invention comprises a mobile station including means for determining transmission timing of an upstream signal using the control information described above.

A program in accordance with the invention comprises a program for causing a computer to execute transmission timing control for controlling transmission timing of an upstream signal of a mobile station in a base station, the program including: a timing control process to notify the mobile station of control information for controlling the transmission timing in every frame of the upstream signal.

Further, another program according to the present invention comprises a program for causing a computer to execute a process of a mobile station that includes transmission timing control of the upstream signal in response to reception to notification from a base station of control information for controlling transmission timing in every frame of the upstream signal.

Operation of the present invention will be described. When control information for controlling transmission timing of an upstream signal of the mobile station is generated in the base station, the mobile station is notified of the control information in every frame of the upstream signal. In an exemplary embodiment, the control information is generated by determining the transmission timing using a power delay profile which is obtained by being added and synthesized over a plurality of frames of the upstream signal in every RTT Namely, (all or a part) of the power delay profile obtained in every frame of the upstream signal is synthesized by the RTT in consideration of the frame whose transmission timing is varied, a multipath situation is estimated, and path search is carried out, whereby the amount of variation in upstream transmission timing is calculated. This makes it possible to heighten resistance to an error in the timing control signal, and transmission timing control can be carried out correctly.

The present invention instructs the mobile station of the timing control signal indicating the amount of variation in the transmission timing in every frame from the base station. As a result, resistance to an error in the timing control signal can be heightened and the transmission timing control can be carried out correctly.

Further, according to the present invention, accuracy of the power delay profile is heightened by adding and synthesizing the power delay profiles. This indicates that it is possible to instruct optimal transmission timing, resulting in accuracy of the adaptive transmission timing control being heightened.

### Brief Description of the Drawings

Fig. 1 is a functional block diagram of a first exemplary embodiment of the present invention;
Fig. 2 is a timing chart showing an action of the first exemplary embodiment of the present invention;
Fig. 3 is a functional block diagram of a second exemplary embodiment of the present invention;
Fig. 4 is a timing chart showing an action of the second exemplary embodiment of the present invention;
Fig. 5 is a functional block diagram of a third exemplary embodiment of the present invention;
Fig. 6 is a timing chart showing an action of the third exemplary embodiment of the present invention;
Fig. 7 is a functional block diagram showing the prior art; and
Fig. 8 is a timing chart showing an action of Fig. 5.

### Best Mode for Carrying Out the Invention

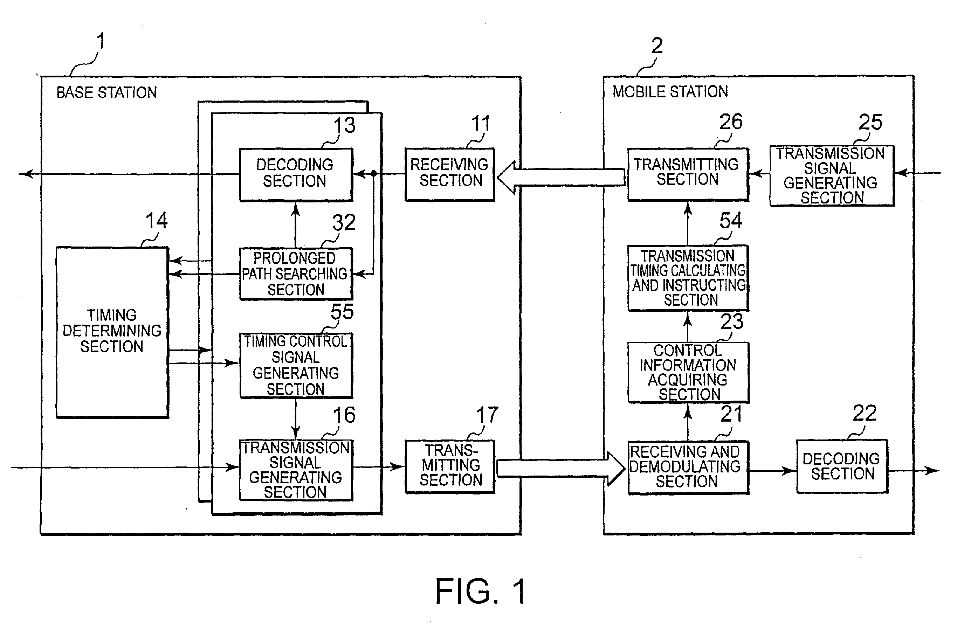

Next, exemplary embodiments of the present invention will be described in detail with reference to the drawings. Fig. 1 is a configuration example of a wireless communication system that carries out adaptive transmission timing control according to a first exemplary embodiment of the present invention, and sections similar to those in Fig. 7 are denoted by the same reference numerals.

In a base station 1, signals from a plurality of mobile stations 2 (for the sake of simplification, only one mobile station is shown in the drawing) are received by a receiving section 11, and signals from the receiving section are sent to a prolonged path searching section 32 and a decoding section 13. In the prolonged path searching section 32, a multipath situation is grasped using data of a plurality of frames to search timing of each path. In the decoding section 13, a decoding process including despreading is carried out in accordance with timing information of each path from the prolonged path searching section 32 to obtain decoded data.

In a timing determining section 14, optimal transmission timing of each mobile station is calculated using a multipath situation of each mobile station supplied from the prolonged path searching section 32, and a timing control signal generating section 55 is notified of a difference from current timing as the amount of variation in the transmission timing. To be described more specifically, in the timing determining section 14, the amount of variation in the transmission timing is calculated in every frame. Then, what is used for the calculation is a multipath situation of each mobile station supplied from the prolonged multipath searching section 32. As will be explained specifically later, the number of upstream signal frames used to calculate the amount of variation in the transmission timing differs depending on by which frame the amount of variation in the transmission timing is calculated. In the timing control signal generating section 55, the amount of variation in the transmission timing is superimposed on the timing control signal. Generation of a timing control signal is carried out in every frame. In a transmission signal generating section 16, data and a control signal including the timing control signal are then generated and transmitted by a transmitting section 17.

In the mobile station 2, a signal from the base station 1 is received by a receiving and demodulating section 21 to demodulate data and control information. The demodulated data are then decoded in a decoding section 22. Further, the demodulated control information is sent to a control information acquiring section 23, and the timing control signal is extracted from the control information. The extracted timing control signal is sent to a transmission timing calculating and instructing section 54, the amount of variation in the transmission timing is obtained from the timing control signal, and new transmission timing is here obtained from the amount of variation in the transmission timing and previous transmission timing.

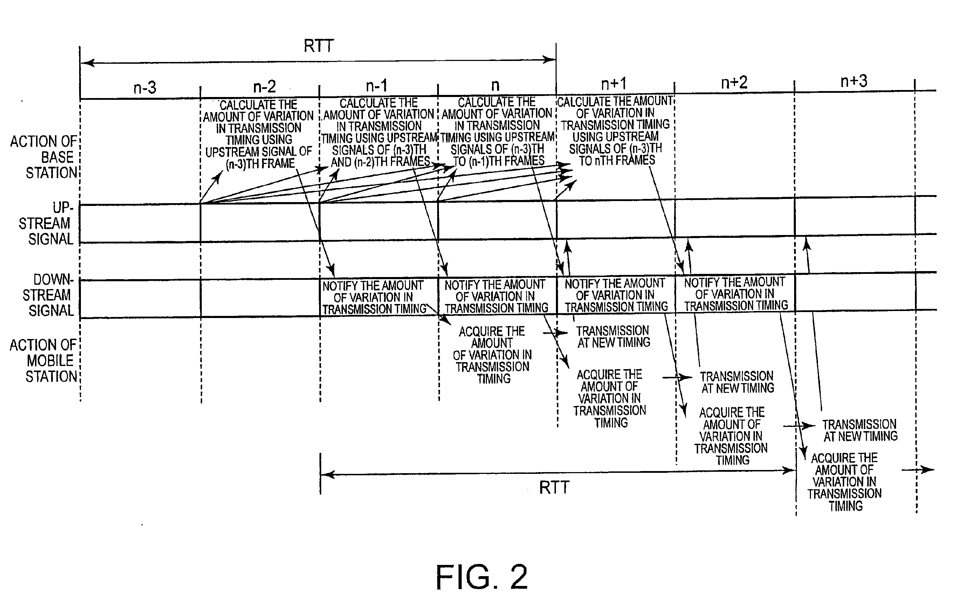

Fig. 2 is a timing chart showing an operation of one exemplary embodiment of the present invention, and shows the case where RTT is set to four frames and processing is performed for every four frames. In the present exemplary embodiment, in the base station, power delay profiles obtained by using reception signals of upstream frames for every frame are added and synthesized in sequence in the RTT unit, and the amount of variation in the transmission timing of an upstream signal for every frame is obtained from this added and synthesized result to notify the mobile station of it. The addition and synthesization of power delay profiles is carried out in the prolonged path searching section 32, and the calculation of the amount of variation in the transmission timing is carried out in the timing determining section 14. However, here, the number of frames in the upstream signal that is a target of the prolonged path searching section is different from each other in every frame. Therefore, the timing determining section 14 outputs a calculation result in every frame.

To be explained specifically using Fig. 2, assume that an upstream signal is composed of four frames from a (n-3)th frame to a nth frame in one section, a downstream signal corresponding to it, that is, downstream frames for notifying the mobile station of the amount of variation in the transmission timing of the targeted upstream frame are four frames from a (n-1)th frame to a (n+2)th frame. In the base station, a delay profile is first obtained at a (n-2)th frame using an upstream reception signal of a (n-3)th frame, the amount of variation in the transmission timing is calculated, and the mobile station is notified of the result with a downstream signal of the (n-1)th frame. In the mobile station, the amount of variation in the transmission timing of which the mobile station is notified in the downstream signal of this (n-1)th frame is acquired at a nth frame, and an upstream signal of a (n+1)th frame is transmitted at new timing.

Next, in the base station, a delay profile is obtained at the (n-1)th frame by being added and synthesized using the upstream reception signals of the (n-3)th and (n-2)th frames, the amount of variation in the transmission timing is calculated, and the mobile station is notified of the result in a downstream signal of the nth frame. In the mobile station, the amount of variation in the transmission timing of which the mobile station is notified in the downstream signal of this nth frame is acquired at the (n+1)th frame, and an upstream signal of a (n+2)th frame is transmitted at new timing.

Next, in the base station, a delay profile is obtained at the nth frame by being added and synthesized using the upstream reception signals of the (n-3)th to (n-1)th frames, the amount of variation in the transmission timing is calculated, and the mobile station is notified of the result in a downstream signal of the (n+1)th frame. In the mobile station, the amount of variation in the transmission timing of which the mobile station is notified in this (n+1)th frame is acquired at the (n+2)th frame, and an upstream signal of a (n+3)th frame is transmitted at new timing.

Moreover, in the base station, a delay profile is obtained at the (n+1)th frame by being added and synthesized using the upstream reception signals of the (n-3)th to nth frames, the amount of variation in the transmission timing is calculated, and the mobile station is notified of the result in a downstream signal of the (n+2)th frame. In the mobile station, the amount of variation in the transmission timing of which the mobile station is notified in this (n+2)th frame is acquired at the (n+3)th frame, and an upstream signal of a (n+4)th frame (not shown in the drawings) is transmitted at new timing.

Next, an example of a method of obtaining the delay profile thus added and synthesized and calculating (determining) the amount of variation in the transmission timing from the result in the base station will be described. In consideration of the case where the amount of variation in the transmission timing of a downstream signal for every frame could not be transmitted to the mobile station correctly, the power delay profile thus added and synthesized when the transmission timing could be transmitted correctly is compared with a power delay profile obtained by being added and synthesized on the assumption that the transmission timing has not been transmitted correctly, and on the assumption that the transmission timing has not been varied, for example, (or a power delay profile obtained from the signal actually received). Suitable one is then selected. As a method of selection, there are a method of selecting one in which a peak level of reception timing is higher than that in the other, a method of selecting one with which the reception timing obtained from a profile in every frame corresponds, and the like.

To be described more specifically, when control information is generated, a power delay profile is obtained in every frame, and a peak position of the power delay profile is set to a path position. In the case where the amount of change in the path position at timing when variation in the transmission timing from the base station is reflected corresponds with the amount of variation in the transmission timing from the base station, it is determined that the variation in the transmission timing has been carried out correctly in the mobile station. If not so, it is determined that the variation in the transmission timing has not been carried out correctly in the mobile station.

Of course, in consideration of the case where it has been varied to incorrect transmission timing, among power delay profiles added on the assumption of all of variable transmission timings, the most correct one (one in which a level of reception timing thus added and synthesized is higher, one with which the reception timing obtained from a profile in every frame corresponds and the like) may be selected from them. More specifically, when the control information is generated, transmission timing of the mobile station is determined by taking, as behavior of the mobile station, transmission timing in which a level of path timing is largest in a power delay profile obtained by being added and synthesized on the assumption that the mobile station transmits it against all of transmission timing when the mobile station can carry it out, or taking, as behavior of mobile station, the amount of change when the amount of change in the path position obtained from the power delay profile thus added and synthesized is the amount of variable transmission timing in the mobile station.

The amount of variation in the transmission timing is then calculated from a multipath situation subjected to path search so that reception timing of a signal from the mobile station corresponds with each other in the base station, and the mobile station is notified of the amount of variation in the transmission timing by means of a timing control signal in a downstream signal.

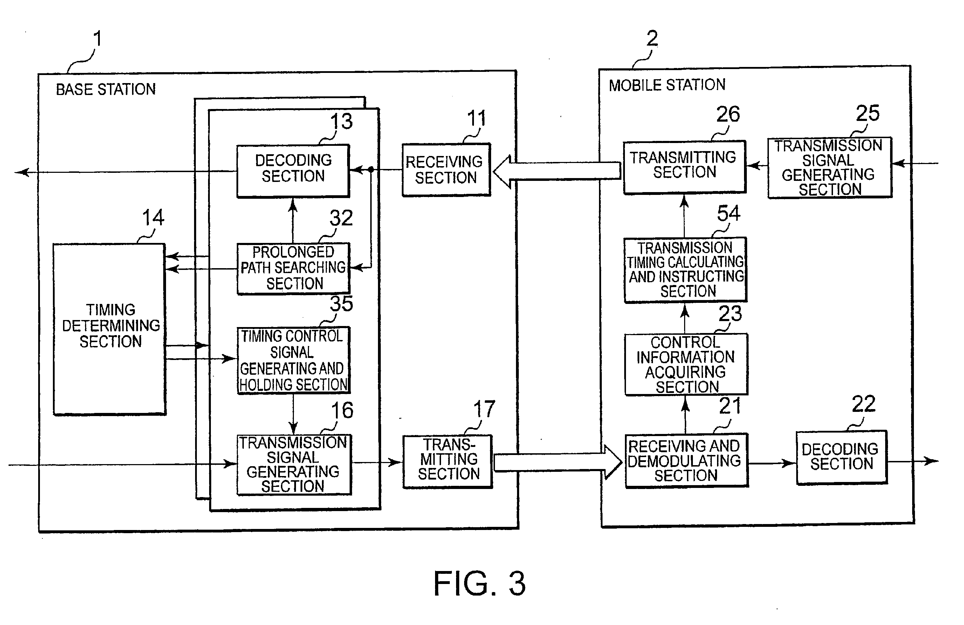

Next, a second exemplary embodiment of the present invention of the wireless communication system that carries out adaptive transmission timing control will be described with reference to Fig. 3. In this regard, sections similar to those in Fig. 7 are denoted by the same reference numerals.

In a base station 1, signals from a plurality of mobile stations 2 (for the sake of simplification, only one mobile station is shown in the drawing) are received by a receiving section 11, and signals from the receiving section are sent to a prolonged path searching section 32 and a decoding section 13. In the prolonged path searching section 32, a multipath situation is grasped using data of a plurality of frames to search timing of each path. In the decoding section 13, a decoding process including despreading is carried out in accordance with timing information of each path from the prolonged path searching section 32 to obtain decoded data.

In a timing determining section 14, optimal transmission timing of each mobile station is calculated using a multipath situation of each mobile station supplied from the prolonged path searching section 32, a timing control signal generating and holding section 35 is notified of a difference from current timing as the amount of variation in the transmission timing. Determination of the amount of variation is carried out once at a frame in one RTT. In the timing control signal generating and holding section 35, when determination of the amount of variation is received, generation of a timing control signal is carried out once in the RTT, and the signal is held for the time of RTT (over the frames corresponding to the RTT). In the timing control signal generating and holding section 35, the amount of variation in the transmission timing is superimposed on the timing control signal in every frame. In the transmission signal generating section 16, data and a control signal including the timing control signal are then generated to transmit it to the transmitting section 17.

In the mobile station 2, a signal from the base station 1 is received by a receiving and demodulating section 21 to demodulate data and control information. The demodulated data are then decoded in a decoding section 22. Further, the demodulated control information is sent to a control information acquiring section 23, and the timing control signal is extracted from the control information. The extracted timing control signal is sent to a transmission timing calculating and instructing section 44, and the amount of variation in the transmission timing is here obtained from the timing control signal, and new transmission timing is obtained from the amount of variation in the transmission timing and previous transmission timing.

Calculation of the transmission timing is carried out in every RTT in the base station. However, in a mobile station, timing control signals for a plurality of frames are synthesized, the amount of variation in the transmission timing is obtained from this synthesized timing control signal, and transmission timing is determined from the amount of variation in the transmission timing and previous transmission timing. A data string transmitted from the mobile station is converted to a format to be transmitted in the transmission signal generating section 25, and is transmitted at the transmission timing instructed from the transmission timing instructing section 24 in the transmitting section 26.

Fig. 4 is a timing chart for explaining an operation of the second exemplary embodiment of the present invention. In the present exemplary embodiment, RTT is set to four frames and processing is performed for every four frames. In the present exemplary embodiment, in the base station, a delay profile obtained by using reception signals of upstream frames is added and synthesized with the RTT, and the amount of variation in the transmission timing of an upstream signal is obtained from this added and synthesized result to notify the mobile station of the same amount of variation for the RTT.

To be explained specifically using Fig. 4, when an upstream signal is comprised of four frames from a (n-3)th frame to a nth frame in one section, a downstream signal corresponding to it, that is, downstream frames for notifying the mobile station of the amount of variation in the transmission timing of the targeted upstream frame are four frames from a (n+2)th frame to a (n+5)th frame. In the base station, a delay profile is first obtained at the (n+1)th frame by being added and synthesized using the upstream reception signals of the (n-3)th to nth frames, the amount of variation in the transmission timing is calculated, and the mobile station is notified of the result in a downstream signal of the (n+2)th frame. In a downstream signal of each of the (n+3)th frame, a (n+4)th frame and the (n+5)th frame, the mobile station is also notified of the same amount of variation in the transmission timing as notified in the downstream signal of the (n+2)th frame.

In the mobile station, the amount of variation in the transmission timing of which the mobile station is notified in the downstream signal of the (n+2)th frame is acquired at the (n+3)th frame, and an upstream signal of the (n+4)th frame is transmitted at new transmission timing. In (n+5)th to (n+7)th frames, it is also transmitted at the same amount of variation in the transmission timing.

In the first and second exemplary embodiments shown in Figs. 2 and 4, the path search is carried out using one in which the delay profile of each frame is added and synthesized in every RTT. However, without being divided in the RTT unit, it can be carried out with moving average. For example, delay profiles are added and synthesized to be obtained using upstream reception signals of (n-6)th to (n-3)th frames, and the amount of variation in the transmission timing is determined from the result to notify the mobile station in a downstream signal of a (n-1)th frame.

Further, delay profiles are added and synthesized to be obtained using upstream reception signals of (n-5)th to (n-2)th frames, and the amount of variation in the transmission timing is determined from the result to notify the mobile station in a downstream signal of a nth frame. Moreover, delay profiles are added and synthesized to be obtained using upstream reception signals of (n-4)th to (n-1)th frames, and the amount of variation in the transmission timing is determined from the result to notify the mobile station in a downstream signal of a (n+1)th frame. Thus, it is a method so that four frames, of which delay profiles are added and synthesized, are in turn moved. Namely, in the case where the moving average is carried out, the amount of variation in the transmission timing is obtained from a profile in which delay profiles of upstream four frames are sequentially added and synthesized in every downstream frame to notify the mobile station of it sequentially.

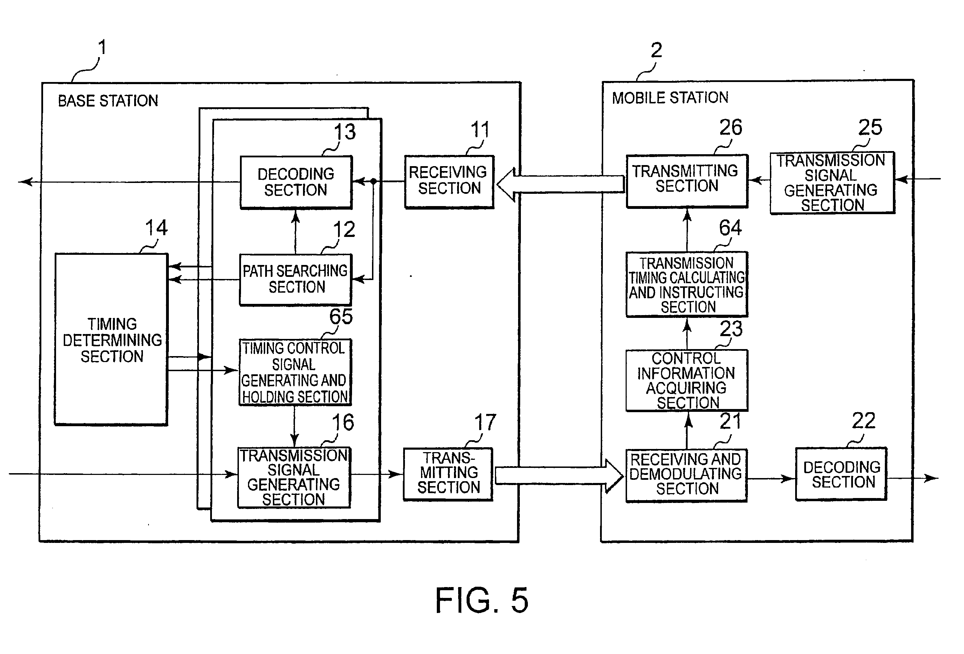

Fig. 5 is a functional block diagram of a third exemplary embodiment. In Fig. 5, sections similar to those in Fig. 7 are also denoted by the same reference numerals in the functional block.

In a base station 1, signals from a plurality of mobile stations 2 (for the sake of simplification, only one mobile station is shown in the drawing) are received by a receiving section 11, and the signals from the receiving section are sent to a path searching section 12 and a decoding section 13. In the path searching section 12, a multipath situation is grasped using data of one frame to search timing of each path. In the decoding section 13, a decoding process including despreading is carried out in accordance with timing information of each path from the path searching section 12 to obtain decoded data.

In a timing determining section 14, optimal transmission timing of each mobile station is calculated using a multipath situation of each mobile station supplied from the path searching section 12, a timing control signal generating and holding section 65 is notified of a difference from current timing as the amount of variation in the transmission timing. Namely, in the timing determining section 14, the amount of variation in the transmission timing is calculated once for a frame period in the RTT time. The timing control signal generating and holding section 65 that is notified of the result then generates data indicating the amount of variation in the transmission timing, superimposes it on a timing control signal, and stores the data in the amount of variation. The stored data in the amount of variation is superimposed on a timing control signal in every subsequent frame. In the transmission signal generating section 16, data and a control signal including the timing control signal are generated to transmit it to the transmitting section 17.

In the mobile station 2, a signal from the base station 1 is received by a receiving and demodulating section 21 to demodulate data and control information. The demodulated data are then decoded in a decoding section 22. Further, the demodulated control information is sent to a control information acquiring section 23, and the timing control signal is extracted from the control information. The extracted timing control signal is sent to a transmission timing calculating and instructing section 64, and the amount of variation in the transmission timing is obtained from the timing control signal, and new transmission timing is here obtained from the amount of variation in the transmission timing and previous transmission timing. Since the same data having the same amount of variation in the transmission timing are transmitted in every frame, a similar process is carried out for every frame, and transmission timing is determined.

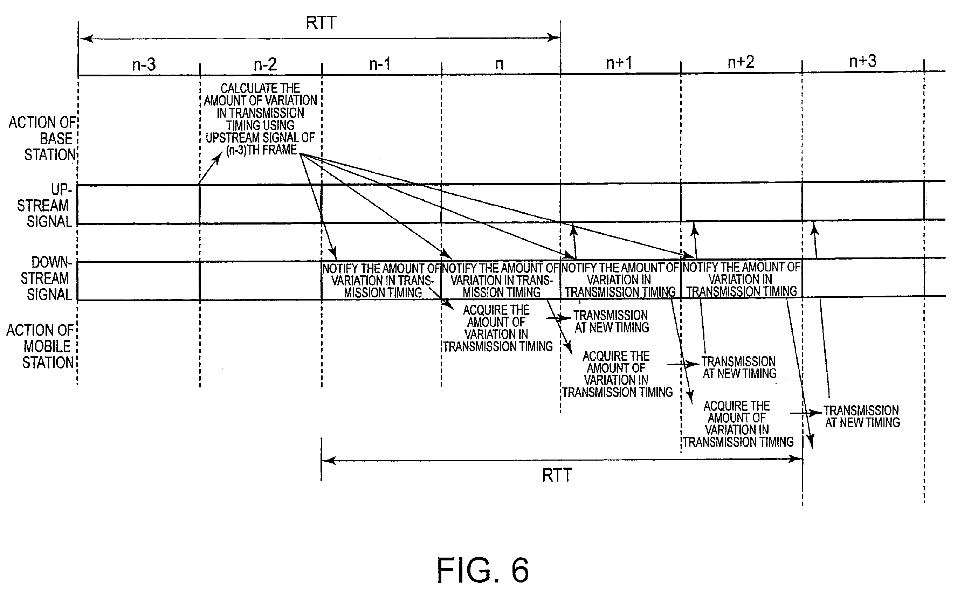

Next, an operation of the third exemplary embodiment will be described with reference to a timing chart of Fig. 6.

The first and second exemplary embodiments are a system for adding and synthesizing delay profiles to carry out path search. However, in the third exemplary embodiment, as shown in Fig. 6, a delay profile of a (n-2)th frame is obtained using an upstream signal of a (n-3)th frame, the amount of variation in the transmission timing is calculated, and the mobile station is notified of the result in downstream signals of (n-1)th to (n+2)th frames. That is, it is a system for notifying it of the same amount of variation in a downstream signal in every frame for the RTT. The mobile station acquires the amount of variation in each of nth to (n+3)th frames, and controls variation in transmission timing of upstream signals of (n+1)th to (n+4)th frames.

In this regard, in the mobile station, transmission timing can be varied in every frame by 1/RTT times as much as the amount of variation in the transmission timing of which the mobile station is notified by the base station. Since the number of upstream frames used by the latter part of the RTT is large, accuracy becomes high. Therefore, it is safer to vary timing step by step than to vary timing significantly from the beginning using ones whose accuracy is low. In particular, in the case of the first exemplary embodiment shown in Fig. 2, since there is a possibility that the correct amount of variation cannot be obtained, in order to prevent transmission timing from shifting in a wrong direction, an effective method is such that the amount of variation is made smaller and the amount of variation becomes the same as that in a normal state (the case where the amount of variation can be obtained correctly and the mobile station can be notified of the information correctly) after the RTT.

The operation (base station and mobile station) of each exemplary embodiment described above can be constructed so that its operation procedures are stored in a recording medium such as a ROM as a program and these are read out by a computer to be executed.

## Claims

1. A transmission timing control system for controlling transmission timing of an upstream signal of a second communication apparatus in a first communication apparatus, the transmission timing control system comprising:
timing control means that notifies the second communication apparatus of control information for controlling the transmission timing with respect to every frame of the upstream signal.

2. The transmission timing control system as claimed in claim 1, wherein the timing control means determines the transmission timing using a power delay profile which is obtained by being added and synthesized over frames of the upstream signal in every RTT (Round Trip Time) cycle of the upstream signal.

3. The transmission timing control system as claimed in claim 1, wherein the timing control means determines the transmission timing using a power delay profile which is obtained by moving-averaging over frames of the upstream signal.

4. The transmission timing control system as claimed in claim 1, wherein the timing control means determines the transmission timing using a power delay profile of a frame of the upstream signal in every RTT (Round Trip Time) cycle of the upstream signal, and notifies the second communication apparatus of the same control information obtained as this result for the RTT.

5. The transmission timing control system as claimed in any one of claims 1 to 4, wherein when the control information is generated, the timing control means calculates a power delay profile obtained by assuming that variation in the transmission timing has been made in the second communication apparatus as instructed from the first communication apparatus and a power delay profile in the case of assuming that variation in the transmission timing has not been made correctly in the second communication apparatus by adding and synthesizing over the frames of the upstream signal, and determines the transmission timing of the second communication apparatus by taking one whose level of path timing is larger as behavior of the second communication apparatus.

6. The transmission timing control system as claimed in any one of claims 1 to 4, wherein when the control information is generated, the timing control means obtains a power delay profile in every frame, and sets a peak position of the power delay profile to a path position,
wherein in the case where the amount of change in the path position at timing when variation in the transmission timing from the first communication apparatus is reflected corresponds with the amount of variation in the transmission timing from the first communication apparatus, the timing control means determines that the variation in the transmission timing has been made correctly in the second communication apparatus, and
wherein in the case where the amount of change does not correspond with the amount of variation, the timing control means determines that the variation in the transmission timing has not been made correctly in the second communication apparatus.

7. The transmission timing control system as claimed in any one of claims 1 to 4, wherein when the control information is generated, the timing control means produces the power delay profiles by adding and synthesizing on the assumption that the second communication apparatus transmitted it at all of transmission timings when the second communication apparatus can carry it out, and determines the transmission timing of the second communication apparatus by taking the most correct one as behavior of the second communication apparatus.

8. A transmission timing control method of controlling transmission timing of an upstream signal of a second communication apparatus in a first communication apparatus, the transmission timing control method comprising:
a timing control step of notifying the second communication apparatus of control information for controlling the transmission timing with respect to every frame of the upstream signal.

9. The transmission timing control method as claimed in claim 10, wherein the timing control step includes a step of determining the transmission timing using a power delay profile which is obtained by being added and synthesized over a plurality of frames of the upstream signal in every RTT (Round Trip Time) cycle of the upstream signal.

10. The transmission timing control method as claimed in claim 9, wherein the timing control step includes a step of determining the transmission timing using a power delay profile which is obtained by moving-averaging over frames of the upstream signal.

11. The transmission timing control method as claimed in claim 8, wherein the timing control step includes a step of determining the transmission timing using a power delay profile of a frame of the upstream signal in every RTT (Round Trip Time) cycle of the upstream signal, and notifying the second communication apparatus of the same control information obtained as this result for the RTT.

12. The transmission timing control method as claimed in any one of claims 8 to 11, wherein the timing control step includes a step of calculating a power delay profile obtained by assuming that variation in the transmission timing has been made in the second communication apparatus as instructed from the first communication apparatus and a power delay profile obtained by assuming that variation in the transmission timing has not been made correctly in the second communication apparatus by adding and synthesizing over the frames of the upstream signal when the control information is generated, and determining the transmission timing of the second communication apparatus by taking one whose level of path timing is larger as behavior of the second communication apparatus.

13. The transmission timing control method as claimed in any one of claims 8 to 11, wherein the timing control step includes a step of obtaining a power delay profile in every frame when the control information is generated, and setting a peak position of the power delay profile to a path position, and
wherein the timing control step includes a step of determining that variation in the transmission timing has been made correctly in the second communication apparatus in the case where the amount of change in the path position at timing when the variation in the transmission timing from the first communication apparatus is reflected corresponds with the amount of variation in the transmission timing from the first communication apparatus, and determining that the variation in the transmission timing has not been made correctly in the second communication apparatus in the case where the amount of change does not correspond with the amount of variation.

14. The transmission timing control method as claimed in any one of claims 8 to 11, wherein the timing control step includes a step of taking, as behavior of the second communication apparatus, transmission timing at which a level of path timing is the largest in the power profile obtained by being added and synthesized on the assumption that the second communication apparatus transmitted it at all of transmission timing when the second communication apparatus can carry out it when the control information is generated, or taking, as behavior of the second communication apparatus, an amount of change in a path position obtained from the power delay profile thus added and synthesized in the case where the amount of change is an amount of transmission timing that can be varied in the second communication apparatus, and determining the transmission timing of the second communication apparatus.

15. A first communication apparatus comprising the transmission timing control system as claimed in any one of claims 1 to 7.

16. The first communication apparatus as claimed in claim 15, wherein the first communication apparatus comprises a base station.

17. A second communication apparatus comprising means for determining transmission timing of the upstream signal in response to reception of control information for controlling the transmission timing in every frame of the upstream signal generated in the transmission timing control system as claimed in any one of claims 1 to 7.

18. The second communication apparatus as claimed in claim 17, wherein the second apparatus comprises a mobile station.

19. The second communication apparatus as claimed in claim 17, wherein the determining means determines the transmission timing by multiplying the control information by 1/RTT.

20. A program for causing a computer to execute transmission timing control for controlling transmission timing of an upstream signal of a mobile station in a base station, the program comprising:
a timing control process to notify the mobile station of control information for controlling the transmission timing in every frame of the upstream signal.

21. A program for causing a computer to execute a process of a mobile station that performs transmission timing control of the upstream signal in response to reception from a base station of notification of control information for controlling transmission timing in every frame of the upstream signal.
